# EUROPEAN PATENT APPLICATION

(11) **EP 2 947 107 A1**
(43) Date of publication of application: **25.11.2015**
(21) Application number: 15168610.2
(22) Date of filing: 21.05.2015
(51) Int. Cl.: C08G 18/66, D06N 3/00, C08G 18/76, C08G 18/32, C08G 18/42, D06N 3/14, B32B 27/40

(54) **POLYURETHANE-BASED LAMINATED MATERIAL**

(30) Priority: 23.05.2014 IT MI20140949; 27.06.2014 IT MI20141170
(71) Applicant: Fiscatech S.p.A., 27029 Vigevano (PV) (IT)
(72) Inventor: Costamagna, Achille, 27029 Vigevano, PAVIA (IT); Ugliotti, Valter, 27029 Vigevano, PAVIA (IT)
(74) Representative: Long, Giorgio

(57) **Abstract**

This invention relates to a laminated material based on polyurethane, a process for its preparation and its use in the leather industry.

In particular, this invention relates to a polyurethane-based synthetic material free of solvents, printable and resistant to bending, said material comprising a base support on which is disposed a layer of polyester-based thermoplastic polyurethane polymer.

## Description

### Field of the technique of the invention

This invention relates to a laminated material based on polyurethane, a process for its preparation and its use in the leather industry.

### State of the art

In the leather industry, natural leather is increasingly being replaced by synthetic materials. These materials generally comprise a fabric base, for example cotton, on which a film of a plastic material is deposited. Normally, for these applications, polyvinyl chloride (PVC) is the plastic material used, which has the characteristic of being printable.

In addition to having a significantly lower cost, synthetic materials allow a greater range of processing than natural leather, for example embossing or printing. For this reason, these materials are also used for luxury goods, such as handbags, wallets and other leather articles produced by the most prestigious fashion brands that market personalized items, often bearing the logo of the producing company.

It is clear that, for such uses, the synthetic material has to meet certain quality requirements. In particular, it would be opportune if the synthetic material used also had, in addition to an appealing appearance, a high resistance to wear. In fact, those who purchase leather goods from a famous, and thus very costly, brand are not inclined to accept their deterioration in just a few years.

Unfortunately, the synthetic materials currently used do not fully meet those requirements. If, in fact, their exterior appearance is acceptable, their resistance is not satisfactory and they may be the subject of complaints.

Another increasingly serious problem is the ecological one. Very often such synthetic materials are made by processes that involve the use of solvents, traces of which remain in the leather article and may then be gradually released causing possible harm to the owner of the article.

There is thus a need to make available a material for leather articles that overcomes the above problems and has high quality characteristics and low cost.

### Summary of the invention

This invention therefore relates to a synthetic material based on polyurethanes characterized in that it is free of solvents, printable and has a high resistance to flexing.

It also relates to the use of such material to make leather articles and a leather article thus obtained.

This invention further relates to a process for manufacturing a synthetic material based on polyurethanes characterized in that it is free of solvents, printable and has a high resistance to flexing.

Further characteristics and advantages of the process according to the invention will be evident from the following description of examples of preferred embodiments, provided in an indicative and non-limiting way.

### Brief description of the drawings

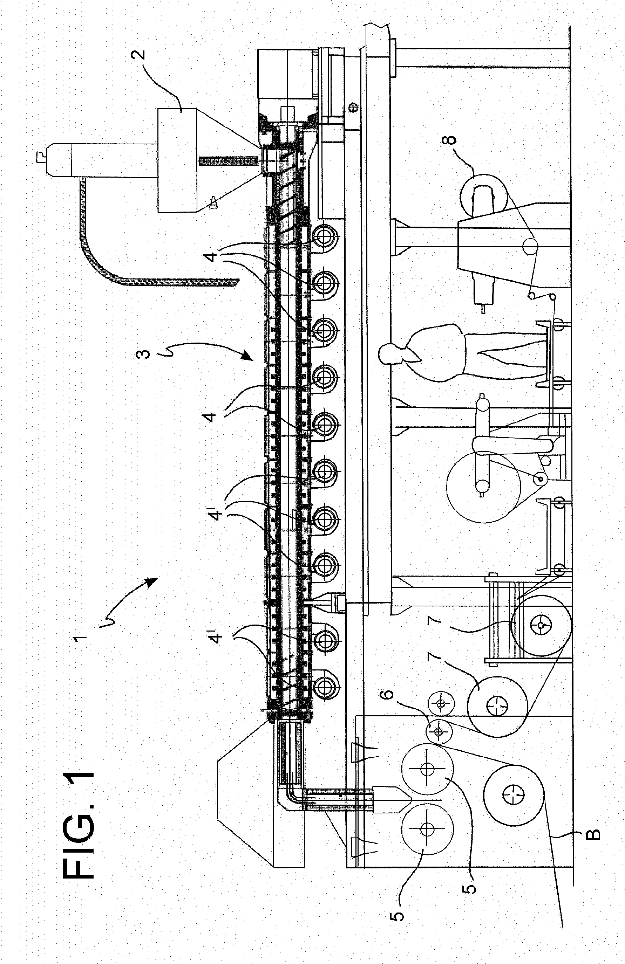

Figure 1 is a schematic view of a plant for the production of the synthetic material according to the invention.

### Detailed description of the invention

This invention relates to a synthetic material based on polyurethanes characterized in that it is free of solvents, printable and has a high resistance to flexing.

In certain embodiments, the material according to the invention comprises a base support on which is disposed a layer of polyester-based thermoplastic polyurethane polymer.

In certain embodiments, the polyester-based thermoplastic polyurethane polymer is a linear polymer of polyaddition of:
- A polyester polyol based on polyethylene adipate (*soft* segment),
- diphenylmethane-4, 4'-diisocyanate 15-25% by weight (*hard* segment), and
- 1,4-butanediol 3-8% by weight (chain extender),
wherein the polyester polyol based on polyethylene adipate has an average molecular weight ranging from 30,000 to 50,000 g/mol and wherein the average molecular weight of the polyester based thermoplastic polyurethane polymer is between 200,000 and 250,000 g/mol.

The polyester polyol based on polyethylene adipate is obtained from adipic acid and ethylene glycol in the amount of 50-70% by weight.

Such polymer preferably has the following properties (polymer A):
- density of 1.18 to 1.20 g/cm³ (DIN 53516),
- Shore A hardness of 60 to 65 (DIN 53505),
- tear resistance greater than 60 N/mm (DIN 53515),
- abrasion resistance greater than 15 mm³ and less than 40 mm³ (DIN 53516).

Such polymers are commercial and, for example, are sold under the trade name APAN 60 MH.

In other embodiments, polyester-based thermoplastic polyurethane polymers can be used as defined above, but having the following properties:
- density of 1.19 to 1.21 g/cm³ (DIN 53516),
- Shore A hardness between 84 and 92 (DIN 53505),
- tear resistance greater than 80 N/mm (DIN 53515),
- abrasion resistance less than 30 mm³ (DIN 53516).

Polyurethane polymer is solvent-free and, preferably, free of phthalate-based plasticizers.

The layer of polyurethane polymer is an extruded laminate that is coupled to said base support.

The base support is preferably a fabric, more preferably a 100% cotton fabric.

In certain embodiments, a cotton fabric with a basis weight of about 320 g/m² and a thickness of about 0.90 mm is used. More preferably, the cotton fabric comprises 25 warp threads/cm and 19 weft threads/cm and has a longitudinal elongation of 11% and a transverse elongation of 19%.

The polyurethane-based material according to the invention can be prepared using a process that comprises the following steps:
a) extrusion of a polyester-based thermoplastic polyurethane polymer as defined above, possibly in the presence of a colouring agent, to form an extruded viscous fluid;
b) lamination of the extruded viscous fluid of step a) to form a polymer film in the viscous fluid state;
c) coupling of the polymer film of step b) with the base support as defined above;
d) cooling of the material obtained according to step c) to form the polyurethane-based material according to the invention;
e) optionally, finishing the surface of the material of step d).

In certain embodiments, extrusion step a) is conducted at temperatures between 170°C and 210 °C.

In certain embodiments, lamination step b) is conducted through the passage of the polymer in the viscous fluid state between two laminating cylinders. The laminating cylinders preferably have a temperature between 160 °C and 200 °C, so as to maintain the polymer in the viscous fluid state. This temperature will depend on the polymer used, for example for the polymer A as defined above this temperature will be about 170 °C.

The laminating cylinders are adjustable so as to vary the reciprocal distance. In this way it is possible to change the thickness of the polymer film and thus the amount of polymer per cm² to be coupled to the base support.

The lamination speed is dictated by the amount of polymer to be deposited on the laminating cylinders. The process of the invention preferably uses a lamination speed comprised between 5 and 15 m (linear)/minute, or between 5 and 10 m (linear)/min.

The operating pressure applied by the laminating cylinders to the polymer film is another important parameter, because it determines the homogeneity of the polymer over the entire surface of the cylinders. The operating pressure is preferably between 75 and 100 atm.

Step c) of coupling the polymer film in the viscous fluid state with the base support is conducted by passage through cooled cylinders operating at a pressure between 50 and 100 atm. Depending on the pressure applied, a greater or lesser penetration of the polymer in the base support is obtained.

Step d) is carried out by passage through cooling cylinders.

Surface finishing step e) may comprise the following processes:
i) gravure printing with a polyurethane compound receptive to digital printing inks, followed by digital printing, preferably a polyester-based aliphatic polyurethane opacified with micronized silicas;
ii) protective treatment of the digital printing using polycarbonate/ester polyurethane in aqueous dispersion, preferably with a vinyl-acrylic resin, modified with 10% by weight of aliphatic polycarbonate-based polyurethane;
iii) embossing.

According to an embodiment, the polyurethane-based material according to the invention has the following mechanical characteristics:
- longitudinal tensile strength 550 N (UNI EN ISO1421);
- transverse tensile strength 900 N (UNI EN ISO 1421);
- elongation at longitudinal break 7% (UNI EN ISO 1421);
- elongation at transverse break 20% (UNI EN ISO 1421);
- longitudinal tear 60 N (UNI EN ISO 4674/1);
- transverse tear 40 N (UNI EN ISO 4674/1);
- longitudinal resistance to repeated bending* 650,000 cycles (UNI 4818/13);
- transverse resistance to repeated bending* 350,000 cycles (UNI 4818/13);
- dry/wet abrasion resistance (Martin Dale) 400,000 cycles (SATRA TM31);
- lightfastness 7/8 (UNI EN ISO 105 B-02).
* The tests were performed at room temperature, at - 10 °C and after hydrolysis treatment (accelerated aging at 90 °C and 80% relative humidity for 48 hours), giving the same result.

According to a different embodiment, the polyurethane material of the invention is constituted solely by the layer of polyester-based thermoplastic polyurethane polymer as defined above, i.e., without the base support. The result is a material less resistant to breakage by load, but much more flexible and resistant to breakage by elongation. This material is also thinner and lighter than the one described above and therefore it can be used in certain special applications that require these characteristics. The product obtained has many applications in the fields of upholstered furniture, injection moulded products for furnishings and for covering saddles in the cycle/motorcycle industry and in the fitness gym industry for equipment of common use (benches rugs, cushions) and for instrumental equipment such as tread mills, bikes, etc.

The process for the production of the polyurethane material according to this embodiment is similar to that described above and includes the following steps:
a) extrusion of a polyester-based thermoplastic polyurethane polymer as defined above, possibly in the presence of a colouring agent, to form an extruded viscous fluid;
b) lamination of the extruded viscous fluid of step a) to form a polymer film in the viscous fluid state;
c) coupling of the polymer film of step b) with a release paper;
d) cooling of the material obtained according to step c) to form the polyurethane-based material according to the invention;
d_{bis}) separation of the polyurethane-based material of step d) from the release paper;
e) optionally, finishing the surface of the polyurethane-based material of step d_{bis}).

The operating conditions of the process are the same as those described previously.

The release paper preferably has a weight comprised between 170 g/m² and 220 g/m² and a high-temperature polypropylene or UV-cured acrylic finish.

The result is a material that, in certain embodiments, has the following mechanical characteristics:
- longitudinal tensile strength 60 N (UNI EN ISO1421);
- transverse tensile strength 60 N (UNI EN ISO 1421);
- elongation at longitudinal break 300% (UNI EN ISO 1421);
- elongation at transverse break 300% (UNI EN ISO 1421);
- longitudinal resistance to repeated bending (25 °C) 700,000 cycles (UNI 4818/13);
- transverse resistance to repeated bending (25 °C) 700,000 cycles (UNI 4818/13);
- longitudinal resistance to repeated bending (-10 °C) 500,000 cycles (UNI 4818/13);
- transverse resistance to repeated bending (-10 °C) 500,000 cycles (UNI 4818/13);
- longitudinal resistance to repeated bending (25 °C, post-hydrolysis) 400,000 cycles (UNI 4818/13);
- transverse resistance to repeated bending (25 °C, post-hydrolysis) 400,000 cycles (UNI 4818/13);
- longitudinal resistance to repeated bending (-10 °C, post-hydrolysis) 300,000 cycles (UNI 4818/13);
- transverse resistance to repeated bending (-10 °C, post-hydrolysis) 300,000 cycles (UNI 4818/13).

The hydrolysis treatment provides for an accelerated ageing at 90 °C and 80% relative humidity for 48 hours.

It is reported below an example of the preparation process of the material of the invention, with reference to the production plant shown in figure 1, indicated as a whole with the number 1.

The polyurethane granules (polymer A) are inserted, by means of a loading hopper system 2, in a "single screw" extruder 3 of a length of 6 m (linear) heated with 10 temperature-control fields. The first five control fields 4 are set with an increasing temperature of 10 °C for each field starting from 140 °C, the next five fields 4' are set to a fixed temperature of 190 °C.

The extrusion plant has the task of melting and homogenizing the TPU (thermoplastic polyurethane) granule, bringing the product from the solid to the viscous fluid state and homogenizing the master batch of colorant contained in the TPU compound.

The viscous fluid product obtained is inserted between two laminating cylinders 5 heated (in order to maintain the TPU polymer in the fluid state) to the temperature of 170 °C for both laminating cylinders. The laminating cylinders 5 are adjustable in distance and pressure (in Figure 1 the distance is exaggerated): the different distance between the laminating cylinders is the parameter that allows defining the quantity in gr/m² deposited on the textile support, while the pressure ensures the homogeneity of the polymer on the entire surface of the cylinders. The operating pressure of the cylinders is between 75 and 100 atm and the production speed is between 5 and 10 m (linear)/min. In this case as well, the speed is conditioned by the amount of polymer to be deposited.

After homogenizing the polymer and standardizing the basis weight, we proceed to coupling the molten polymer with the textile support. The coupling is performed with a cooled siliconized cylinder 6 that operates with a pressure of between 50 atm and 100 atm and that puts the textile support B in contact with the external laminating cylinder 5'.

The material thus obtained passes through the cooling cylinders 7 and it is wound in reels 8 of a size between 250 and 350 m (linear).

The entire process described here takes place in the absolute absence of solvent.

The example of procedure described above can be replicated for the embodiment without base support by replacing the latter with release paper and providing, after cooling, a station for separating the release paper from the polyurethane-based material. The separated release paper can be recovered and reused and, to this end, is wound on a suitable reel.

The product obtained from the extrusion process undergoes a first gravure printing finishing treatment with a modified polyurethane compound receptive to digital printing process inks, as defined above.

The digital printing treatment is performed on the product thus obtained.

The printed material receives a finish to protect the digital printing with a polycarbonate/ester polyurethane in aqueous dispersion that confers high lightfastness, high resistance to hydrolysis and high resistance to bending.

The finishing in question requires 48 hours of cross-linking at room temperature, after which the product undergoes the "embossing" treatment, which consists in engraving various designs through temperature and pressure. At the end of the process in question, the article is subjected to a final finishing treatment to give the article feel and appearance.

The finishing is performed with a rotogravure printing presses with a modified polyurethane polymer that gives the product excellent resistance to abrasion, good resistance to hydrolysis and ease of cleaning.

The polyurethane-based material of the invention can be advantageously used in the production of leather goods such as handbags, suitcases, wallets, key cases and other articles that require the use of a printable synthetic material, as it is characterized by a pleasant appearance and feel, high mechanical resistance, in particular in terms of resistance to bending and abrasion, and by low cost.

In particular, leather articles made with the material of the invention have a very low tendency to be cut or crack after repeated bending and flexing, which constitutes a considerable advantage when compared with the articles of the known art made of polyvinyl chloride-based polymer.

Therefore the invention further relates to a leather article made with the polyurethane-based synthetic material according to the invention.

Due to the absence of solvents and phthalate-based plasticizers, the material of the invention is also suitable for food use and can for example be employed for the creation of surfaces intended to come into contact with foodstuffs, such as for example conveyor belts in food plants.

## Claims

1. Extruded polyurethane-based synthetic material free of solvents, printable and resistant to bending, said material being constituted by a layer of polyester-based thermoplastic polyurethane polymer, wherein the polyester-based thermoplastic polyurethane polymer is a linear polymer of polyaddition of:
- A polyester polyol based on polyethylene adipate (*soft* segment),
- diphenylmethane-4, 4'-diisocyanate 15-25% by weight (*hard* segment), and
- 1,4-butanediol 3-8% by weight (chain extender),
wherein the polyester polyol based on polyethylene adipate has an average molecular weight ranging from 30,000 to 50,000 g/mol and wherein the average molecular weight of the polyester-based thermoplastic polyurethane polymer is between 200,000 and 250,000 g/mol.

2. Material according to claim 1, wherein said material comprises a base support, said base support being preferably a 100% cotton fabric.

3. Material according to claim 1 or 2, having the following characteristics:
- density of 1.18 to 1.20 g/cm³ measured according to the DIN 53516 standard,
- Shore A hardness of 60 to 65 measured according to the DIN 53505 standard,
- tear resistance greater than 60 N/mm measured according to the DIN 53515 standard,
- abrasion resistance greater than 15 mm³ and less than 40 mm³ measured according to the DIN 53516 standard.

4. Material according to claim 1 or 2, having the following characteristics:
- density of 1.19 to 1.21 g/cm³ measured according to the DIN 53516 standard,
- Shore A hardness comprised between 84 and 92 measured according to the DIN 53505 standard,
- tear resistance greater than 80 N/mm measured according to the DIN 53515 standard,
- abrasion resistance less than 30 mm³ measured according to the DIN 53516 standard.

5. Material according to any of claims 2 to 4, wherein the 100% cotton fabric has a basis weight of about 320 g/m² and a thickness of about 0.90 mm and preferably comprises 25 warp threads/cm and 19 weft threads/cm and has a longitudinal elongation of 11% and a transverse elongation of 19%.

6. Material according to any of claims 2 to 5, said material having the following characteristics:
- longitudinal tensile strength 550 N according to the UNI EN ISO 1421 standard;
- transverse tensile strength 900 N according to the UNI EN ISO 1421 standard;
- elongation at longitudinal break 7% measured according to the UNI EN ISO 1421 standard;
- elongation at transverse break 20% measured according to the UNI EN ISO 1421 standard;
- longitudinal tear 60 N measured according to the UNI EN ISO 4674/1 standard;
- transverse tear 40 N measured according to the UNI EN ISO 4674/1 standard;
- longitudinal resistance to repeated bending 650,000 cycles measured according to the UNI 4818/13 standard;
- transverse resistance to repeated bending 350,000 cycles measured according to the UNI 4818/13 standard;
- dry/wet abrasion resistance (Martin Dale) 400,000 cycles measured according to the SATRA TM31 standard;
- lightfastness 7/8 measured according to the UNI EN ISO 105 B-02 standard.

7. Material according to claim 1, said material having the following characteristics:
- longitudinal tensile strength 60 N (UNI EN ISO1421);
- transverse tensile strength 60 N (UNI EN ISO 1421);
- elongation at longitudinal break 300% (UNI EN ISO 1421);
- elongation at transverse break 300% (UNI EN ISO 1421);
- longitudinal resistance to repeated bending (25 °C) 700,000 cycles (UNI 4818/13);
- transverse resistance to repeated bending (25 °C) 700,000 cycles (UNI 4818/13);
- longitudinal resistance to repeated bending (-10 °C) 500,000 cycles (UNI 4818/13);
- transverse resistance to repeated bending (-10 °C) 500,000 cycles (UNI 4818/13);
- longitudinal resistance to repeated bending (25 °C, post-hydrolysis) 400,000 cycles (UNI 4818/13);
- transverse resistance to repeated bending (25 °C, post-hydrolysis) 400,000 cycles (UNI 4818/13);
- longitudinal resistance to repeated bending (-10 °C, post-hydrolysis) 300,000 cycles (UNI 4818/13);
- transverse resistance to repeated bending (-10 °C, post-hydrolysis) 300,000 cycles (UNI 4818/13).

8. Process for the production of the polyurethane-based material according to claim 1, comprising the following steps:
a) extrusion of a polyester-based thermoplastic polyurethane polymer as defined above, possibly in the presence of a colouring agent, to form an extruded viscous fluid;
b) lamination of the extruded viscous fluid of step a) to form a polymer film in the viscous fluid state;
c) coupling of the polymer film of step b) with a release paper;
d) cooling of the material obtained according to step c) to form the polyurethane-based material according to the invention;
d_{bis}). separation of the polyurethane-based material of step d) from the release paper;
e) optionally, finishing the surface of the material of step d_{bis}).

9. Process for the production of the polyurethane-based material according to any of claims 2 to 7, comprising the following steps:
a) extrusion of a polyester-based thermoplastic polyurethane polymer as defined above, possibly in the presence of a colouring agent, to form an extruded viscous fluid;
b) lamination of the extruded viscous fluid of step a) to form a polymer film in the viscous fluid state;
c) coupling of the polymer film of step b) with the base support as defined above;
d) cooling of the material obtained according to step c) to form the polyurethane-based material according to the invention;
e) optionally, finishing the surface of the material of step d).

10. Process according to claims 8 or 9, wherein:
- extrusion step a) is conducted at temperatures between 170 °C and 210 °C; and/or
- lamination step b) is conducted by passage of the polymer to the viscous fluid state between two laminating cylinders maintained at a temperature between 160 °C and 200 °C and a pressure between 75 and 100 atm; and/or
- step c) of coupling the polymer film in the viscous fluid state with the base support or with the release paper is conducted by passage through cooled cylinders operating at a pressure between 50 and 100 atm; and/or
- surface finishing step e) may comprise the following processes:
i) gravure printing with a polyurethane compound receptive to digital printing inks, followed by digital printing, preferably a polyester-based aliphatic polyurethane opacified with micronized silicas;
ii) protective treatment of the digital printing using polycarbonate/ester polyurethane in aqueous dispersion, preferably with a vinyl-acrylic resin, modified with 10% by weight of aliphatic polycarbonate-based polyurethane;
iii) embossing.

11. Process according to claim 8, wherein the release paper preferably has a weight comprised between 170 g/m² and 220 g/m² and a high-temperature polypropylene or UV-cured acrylic finish.

12. Use of the polyurethane-based material according to any of claims 1 to 7, for the production of leather articles.

13. Leather articles comprising the polyurethane-based material according to any of claims 1 to 7, said leather articles being preferably of handbags, luggage, wallets or key cases.
